# EUROPEAN PATENT APPLICATION

(11) **EP 4 538 906 A1**
(43) Date of publication of application: **16.04.2025**
(21) Application number: 23910048.0
(22) Date of filing: 08.12.2023
(51) Int. Cl.: G06F 16/955

(54) **FAVORITES PROCESSING METHOD, APPARATUS AND DEVICE, AND STORAGE MEDIUM**

(30) Priority: 27.12.2022 CN 202211690056
(71) Applicant: Beijing Zitiao Network Technology Co., Ltd., Beijing 100190 (CN)
(72) Inventor: TANG, Yuxi, Beijing 100028 (CN); ZENG, Zhizheng, Beijing 100028 (CN)
(74) Representative: Isarpatent
(86) International application number: PCT/CN2023/137497
(87) International publication number: WO 2024/140118

(57) **Abstract**

Provided in the present disclosure are a favorites processing method, apparatus and device, and a storage medium. The method comprises: first, in response to a favorites creation operation acting on a first page, displaying multimedia resources in a bookmarked state according to multimedia types, then receiving a selection operation on at least one multimedia resource belonging to the same multimedia type, and then generating target favorites on the basis of the at least one multimedia resource, wherein a favorites category of the target favorites is determined on the basis of the multimedia type to which the multimedia resources in the target favorites belong. It can be seen that in the embodiments of the present disclosure, favorites of different favorites categories can be constructed for multimedia resources of different multimedia types, such that related functions of the favorites are enriched, thereby improving the user experience.

## Description

### CROSS-REFERENCE TO RELATED APPLICATION(S)

This application claims priority to Chinese Patent Application No. 202211690056.5, entitled "FAVORITES PROCESSING METHOD, APPARATUS, AND DEVICE, AND STORAGE MEDIUM", filed with the China National Intellectual Property Administration on December 27, 2022, which is incorporated by reference in its entirety.

### FIELD

The present disclosure relates to the field of data processing, and in particular, to a favorite processing method, apparatus, and device, and a storage medium.

### BACKGROUND

With the continuous development of Internet technology, the demands of people for software-related functions have become increasingly diverse. At the same time, the technology related to favorites is being applied to various types of software more and more frequently.

Therefore, how to enrich favorite-related functions and enhance use experience of users are technical problems that urgently need to be solved.

### SUMMARY

In order to solve the above technical problems, an embodiment of the present disclosure provides a favorite processing method.

In a first aspect, the present disclosure provides a favorite processing method. The method includes:
in response to a favorite creation operation performed on a first page, displaying multimedia resources that are in a favorited state according to multimedia types;
receiving a selection operation for at least one multimedia resource belonging to a same multimedia type; and
generating a target favorite based on the at least one multimedia resource, wherein a favorite category of the target favorite is determined based on a multimedia type of a multimedia resource contained in the target favorite.

In an alternative implementation, in response to a favorite creation operation performed on a first page, displaying multimedia resources that are in a favorited state according to multimedia types includes:

Navigating from a user personal homepage to a resource display page in response to a trigger operation on a favorite creation control on a user personal homepage, and displaying the multimedia resources that are in the favorited state according to the multimedia types on the resource display page.

In an alternative implementation, before displaying, in response to a favorite creation operation performed on a first page, multimedia resources that are in a favorited state according to multimedia types, the method further includes:
displaying multimedia resources of a target multimedia type that are in the favorited state on the first page; and
correspondingly, in response to a favorite creation operation performed on a first page, displaying multimedia resources that are in a favorited state according to multimedia types includes:
in response to the favorite creation operation performed on the first page, displaying by default the multimedia resources of the target multimedia type that are in the favorited state.

In an alternative implementation, before generating a target favorite based on the at least one multimedia resource, the method further includes:
in response to a trigger operation that switches from the target multimedia type to a first multimedia type, displaying a multimedia resource of a first multimedia type that is in the favorited state.

In an alternative implementation, after generating a target favorite based on the at least one multimedia resource, the method further includes:
displaying the at least one multimedia resource contained in the target favorite.

In an alternative implementation, the method further includes:
displaying at least one favorite on the first page, where multimedia resources contained in favorites of different favorite categories belong to different multimedia types.

In an alternative implementation, each of the at least one favorite has a corresponding category icon, wherein a category icon is used to identify a favorite category of the corresponding favorite.

In a second aspect, the present disclosure provides a favorite processing apparatus. The apparatus includes:
a display module, configured to display, in response to a favorite creation operation performed on a first page, multimedia resources that are in a favorited state according to multimedia types;
a receiving module, configured to receive a selection operation for at least one multimedia resource belonging to the same multimedia type; and
a generation module, configured to generate a target favorite based on the at least one multimedia resource, where a favorite category of the target favorite is determined based on a multimedia type of a multimedia resource contained in the target favorite.

In a third aspect, the present disclosure provides a computer-readable storage medium having instructions stored therein. The instructions, when running on a terminal device, cause the terminal device to implement the above method.

In a fourth aspect, the present disclosure provides a favorite processing device, including a memory, a processor, and a computer program stored on the memory and runnable on the processor. The processor, when executing the computer program, implements the above method.

In a fifth aspect, the present disclosure provides a computer program product. The computer program product includes a computer program/instruction. The computer program/instruction, when executed by a processor, implements the above method.

Compared with the prior art, the technical solutions provided in the embodiments of the present disclosure at least have the following advantages:
according to the favorite processing method provided in embodiments of the present disclosure, firstly, in response to a favorite creation operation performed on a first page, multimedia resources that are in a favorited state are displayed according to multimedia types; and then, a selection operation for the at least one multimedia resource belonging to the same multimedia type is received, and a target favorite is generated based on the at least one multimedia resource, wherein the favorite category of the target favorite is determined based on the multimedia type of the multimedia resource contained in the target favorite. Therefore, according to embodiments of the present disclosure, favorites of different favorite categories may be created for multimedia resources of different multimedia types, thereby enriching favorite-related functions and enhancing user experience.

### BRIEF DESCRIPTION OF THE DRAWINGS

The accompanying drawings herein are incorporated into the specification to form a part of the specification, illustrate embodiments conforming to the present disclosure, and are used to explain the principle of the present disclosure together with the specification.

In order to describe the technical solutions in the embodiments of the present disclosure or in the prior art more clearly, the accompanying drawings required to be used in descriptions of the embodiments or the prior art will be briefly introduced below, and it is apparent that those of ordinary skill in the art may also obtain other accompanying drawings according to these accompanying drawings without creative work.
FIG. 1 is a flowchart of a favorite processing method according to an embodiment of the present disclosure;
FIG. 2 is a schematic diagram of a user personal homepage according to an embodiment of the present disclosure;
FIG. 3 is a schematic diagram of a resource display page according to an embodiment of the present disclosure;
FIG. 4 is a schematic diagram of a favorite name input panel according to an embodiment of the present disclosure;
FIG. 5 is a schematic diagram of a target favorite display page according to an embodiment of the present disclosure;
FIG. 6 is a schematic diagram of a batch management page according to an embodiment of the present disclosure;
FIG. 7 is a schematic diagram of a display page of another target favorite according to an embodiment of the present disclosure;
FIG. 8 is a schematic diagram of a structure of a favorite processing apparatus according to an embodiment of the present disclosure; and
FIG. 9 is a schematic diagram of a structure of a favorite processing device according to an embodiment of the present disclosure.

### DETAILED DESCRIPTION OF EMBODIMENTS

To have clearer understanding of the above objectives, features, and advantages of the present disclosure, the solution of the present disclosure is further described below. It should be noted that the embodiments and the features of the embodiments in the present disclosure may be mutually combined without conflicts.

Many specific details are elaborated in the following description to facilitate a full understanding of the present disclosure, however, the present disclosure may also be implemented in methods different from those described herein. Apparently, embodiments in the specification are only a part rather than all of the embodiments of the present disclosure.

With the continuous development of Internet technology, the demands of people for software-related functions have become increasingly diverse. At the same time, technology related to favorites is being applied to various types of software more and more frequently.

Therefore, how to enrich favorite-related functions and enhance use experience of users are technical problems that urgently need to be solved.

Accordingly, an embodiment of the present disclosure provides a favorite processing method. First, in response to a favorite creation operation performed on a first page, multimedia resources that are in a favorited state are displayed according to multimedia types. Then, a selection operation for at least one multimedia resource belonging to the same multimedia type is received, and a target favorite is generated based on the at least one multimedia resource. A favorite category of the target favorite is determined based on the multimedia type of the multimedia resource contained in the target favorite. Therefore, according to embodiments of the present disclosure, favorites of different favorite categories may be created for multimedia resources of different multimedia types, thereby enriching favorite-related functions and then enhancing user experience.

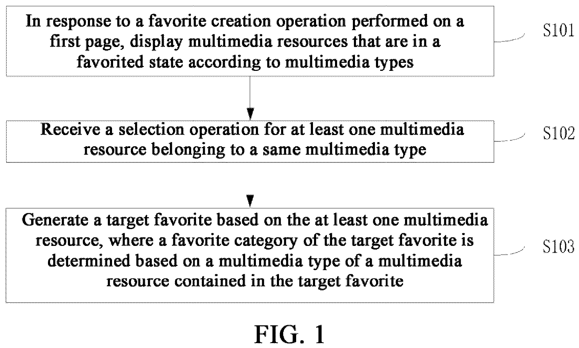

Based on this, an embodiment of the present disclosure provides a favorite processing method that may be applied to a client. Referring to FIG. 1, which is a flowchart of a favorite processing method according to an embodiment of the present disclosure. The method includes followings:

S101: In response to a favorite creation operation performed on a first page, display multimedia resources that are in a favorited state according to multimedia types.

The favorite processing method provided according to embodiments of the present disclosure may be applied to a client. For example, the client may include a client deployed on a smartphone, a client deployed on a tablet, etc.

According to embodiments of the present disclosure, the first page may be any page, such as a user personal homepage, a video playback page, and a social media page.

According to embodiments of the present disclosure, the favorite creation operation performed on the first page may include an operation such as a tap operation or a long-pressing operation triggered for a favorite creation control on the first page.

According to embodiments of the present disclosure, the user may favorite multimedia resources of a plurality of multimedia types, such as favoriting a multimedia resource with a type of video, audio, product, location, or a prop. The multimedia resources favorited by the user may be referred to as multimedia resources that are in a favorited state. A multimedia type may include a type such as video, audio, product, location, or prop. Embodiments of the present disclosure do not impose any limitations in this regard. A multimedia resource may include a video resource, an audio resource, a product resource, etc.

According to embodiments of the present disclosure, when the favorite creation operation performed on the first page is received, the multimedia resources that are in the favorited state may be displayed according to the multimedia types. For example, a video resource, an audio resource, a product resource, etc. that have been favorited by the user may be respectively displayed according to different multimedia types such as a product type, an audio type, and a product type.

In an alternative implementation, when a trigger operation on the favorite creation control on the user personal homepage is received, the user personal homepage is transitioned to a resource display page, and the multimedia resources that are in the favorited state are displayed according to the multimedia types on the resource display page.

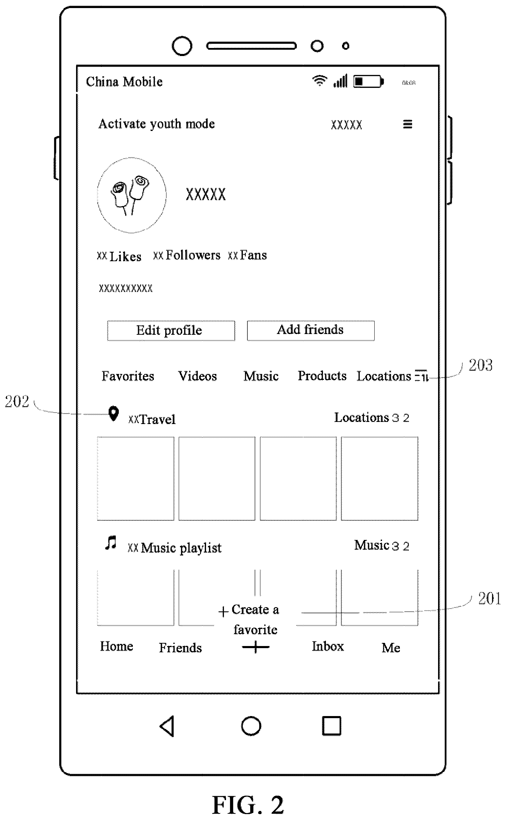

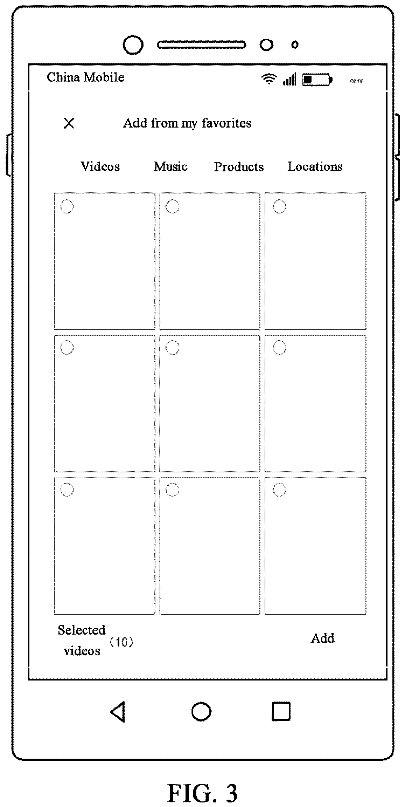

As shown in FIG. 2, FIG. 2 is a schematic diagram of a user personal homepage according to an embodiment of the present disclosure. When a trigger operation on a favorite creation control 201 on the user personal homepage is received, the user personal homepage shown in FIG. 2 is transitioned to a resource display page. As shown in FIG. 3, which is a schematic diagram of a resource display page according to an embodiment of the present disclosure. On the resource display page shown in FIG. 3, a video resource, an audio resource, a product resource, etc. that are currently favorited by the user are respectively displayed according to multimedia types such as video, music, product, and a location.

In practical applications, at least one favorite may also be displayed on the first page. Each favorite may have a corresponding favorite category. Multimedia resources contained in favorites of different favorite categories belong to different favorite types, making it convenient for the user to know the favorite categories of the different favorites.

According to embodiments of the present disclosure, a favorite category of each favorite is determined based on the multimedia type of the multimedia resource contained in the favorite. For example, assuming that the multimedia type corresponding to the multimedia resource contained in a certain favorite is a location type, the favorite category corresponding to the favorite may be determined as a location category. Favorite categories may include categories such as video, audio, product, location, prop, and collection.

In an alternative implementation, to further improve user experience, when favorites are displayed on the first page, a corresponding category icon may also be displayed for each favorite. In some embodiments, a category icon may identify a favorite category of a corresponding favorite.

As shown in FIG. 2, the favorite named "XX Travel" contains 32 files of the location type, such that the favorite category corresponding to the favorite "XX Travel" may be determined as the location, and a category icon 202 is displayed in a preset area corresponding to the favorite name.

S102: Receive a selection operation for at least one multimedia resource belonging to the same multimedia type.

S103: Generate a target favorite based on the at least one multimedia resource.

In some embodiments, a favorite category of the target favorite is determined based on the multimedia type of the multimedia resource contained in the target favorite.

According to embodiments of the present disclosure, among the multimedia resources that are in the favorited state and displayed according to the multimedia types, the user may select at least one multimedia resource to generate the target favorite. The multimedia resources selected by the user belong to the same multimedia type, such as the video type.

Additionally, the user may also select at least one multimedia resource based on theme content, such as a multimedia resource related to the Chinese New Year theme.

According to embodiments of the present disclosure, the selection operation for the at least one multimedia resource may include an operation such as a tap operation or a long-pressing operation for each of the at least one multimedia resource.

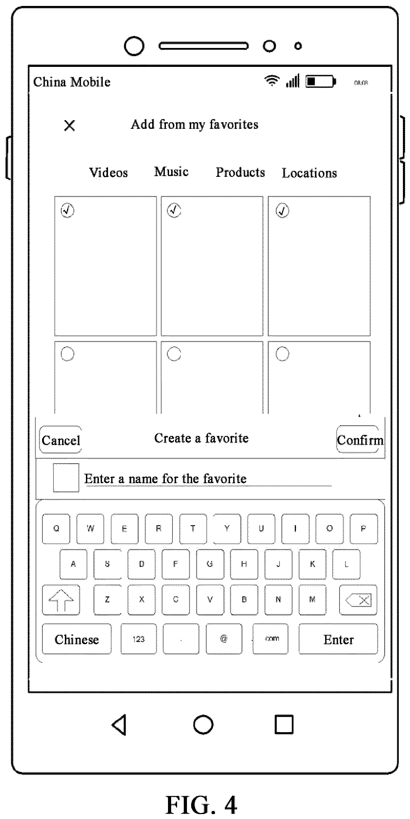

In an alternative implementation, as shown in FIG. 3, when the selection operation for the at least one multimedia resource is received, a favorite name input panel is displayed on the resource display page, thereby facilitating the user to input a name of a favorite on the favorite name input panel, and then the target favorite based on the favorite name input panel is created. As shown in FIG. 4, which is a schematic diagram of a favorite name input panel according to an embodiment of the present disclosure. Embodiments of the present disclosure do not limit a display style or a display position of the favorite name input panel.

In an alternative implementation, after generating the target favorite based on the selected multimedia resource, multimedia resources contained in the successfully-created target favorite may also be displayed.

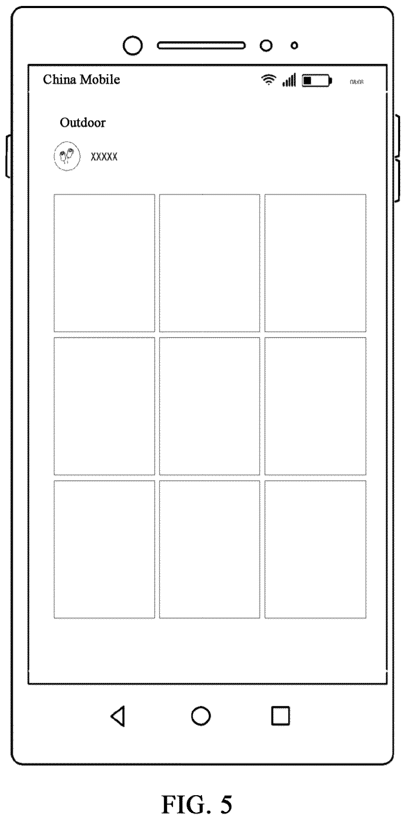

As shown in FIG. 4, when a completion operation performed on the favorite name input panel is received, the resource display page is transitioned to a display page of the target favorite. As shown in FIG. 5, which is a schematic diagram of a display page of a target favorite according to an embodiment of the present disclosure, in which the display page of the target favorite displays multimedia resources contained in the target favorite.

According to the favorite processing method provided in embodiments of the present disclosure, firstly, in response to a favorite creation operation performed on a first page, multimedia resources that are in a favorited state are displayed according to multimedia types. Then, a selection operation for the at least one multimedia resource belonging to the same multimedia type is received, and a target favorite is generated based on the at least one multimedia resource. The favorite category of the target favorite is determined based on a multimedia type of the multimedia resource contained in the target favorite. Therefore, according to embodiments of the present disclosure, favorites of different favorite categories may be created for multimedia resources of different multimedia types, thereby enriching favorite-related functions and then enhancing user experience.

In practical applications, a batch management control may also be set on the first page, thereby triggering a batch management operation on multimedia resources that have been favorited by the user on the first page, batch management of the multimedia resources may be achieved by creating favorites.

According to embodiments of the present disclosure, the batch management operation on the first page may include an operation such as a tap operation or a long-pressing operation on the batch management control on the first page.

In an alternative implementation, if it is determined that the user has the favorited multimedia resources, when a target multimedia type is selected on the first page, multimedia resources of the target multimedia type that are in the favorited state may be displayed on the first page. Then, in response to the favorite creation operation performed on the first page (e.g., tapping the batch management control), the multimedia resources of the target multimedia type that are in the favorited state are displayed on a material display page by default, thereby allowing the user to create a favorite with a favorite category corresponding to the target multimedia type.

According to embodiments of the present disclosure, the favorite creation operation performed on the first page may include an operation such as a tap operation or a long-pressing operation for the batch management control on the first page.

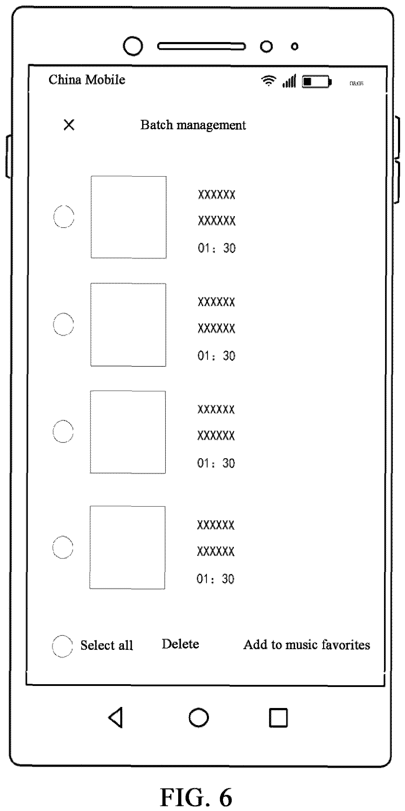

In an alternative implementation, assuming that the target multimedia type is a music type, the multimedia resources in the favorited state that are displayed on the first page are multimedia resources of the music type. When the tap operation performed on a batch management control 203 on the first page is received, the first page is transitioned to a batch management page, and the multimedia resources of the music type in the favorited state are displayed on the batch management page by default. As shown in FIG. 6, which is a schematic diagram of a batch management page according to an embodiment of the present disclosure.

On the batch management page, the user may perform the selection operation on the multimedia resources of the target multimedia type that are in the favorited state and are displayed by default, thereby creating the favorite of the favorite category corresponding to the target multimedia type. For example, a music favorite is created based on the batch management page shown in FIG. 6.

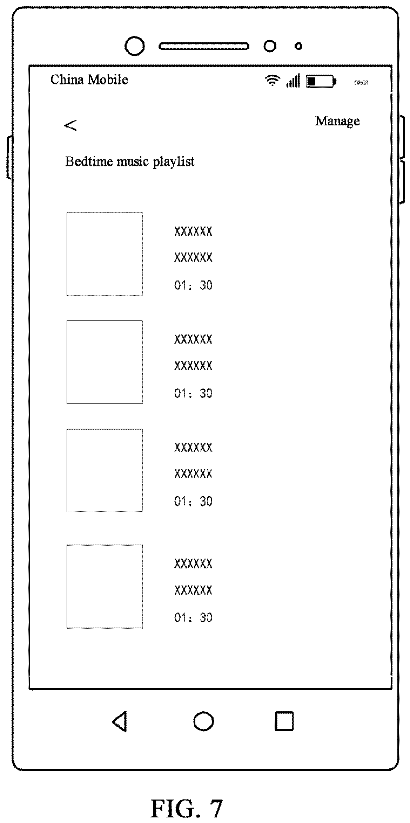

According to embodiments of the present disclosure, after generating the target favorite based on the selected multimedia resources of the target multimedia type on the batch management page, the multimedia resources contained in the favorite may also be displayed, thereby allowing the user to know the content in the created favorite in time. As shown in FIG. 7, which is a schematic diagram of a display page of another target favorite according to an embodiment of the present disclosure. The target favorite display page displays a management control. The user may perform, based on the management control, a further adjustment operation on at least one multimedia resource contained in a target favorite, such as a deletion operation or an addition operation.

In practical applications, during the process of displaying the multimedia resources of the target multimedia type on the first page, if the favorite creation operation performed on the first page is received, the multimedia resources of the target multimedia type that are in the favorited state may still be displayed by default after page switching.

To facilitate the user in creating favorites for multimedia resources of another multimedia type, according to embodiments of the present disclosure, the target multimedia type may be switched to a first multimedia type, thereby displaying multimedia resources of the first multimedia type. Specifically, in response to a trigger operation that switches the target multimedia type to the first multimedia type, a multimedia resource of the first multimedia type that is in the favorited state is displayed.

According to embodiments of the present disclosure, the first multimedia type may include any multimedia type other than the target multimedia type.

According to embodiments of the present disclosure, the trigger operation that switches the target multimedia type to the first multimedia type may include an operation such as a tap operation performed on the first multimedia type Tab.

For example, assuming that the target multimedia type is a video type, when a multimedia resource of the video type that are in the favorited state are displayed, the video type may also be switched to the location type through the tap operation performed on the multimedia type "location", and a multimedia resource of the location type that is in the favorited state may be displayed.

The favorite processing method provided according to embodiments of the present disclosure is not limited to creating favorites of different favorite categories merely through the favorite creation control on the user personal homepage, and may also achieve creation of favorites of different paths through many methods such as the batch management control, thereby further enriching functions related to creating favorites for the multimedia resources of the various multimedia types and enhancing the user experience.

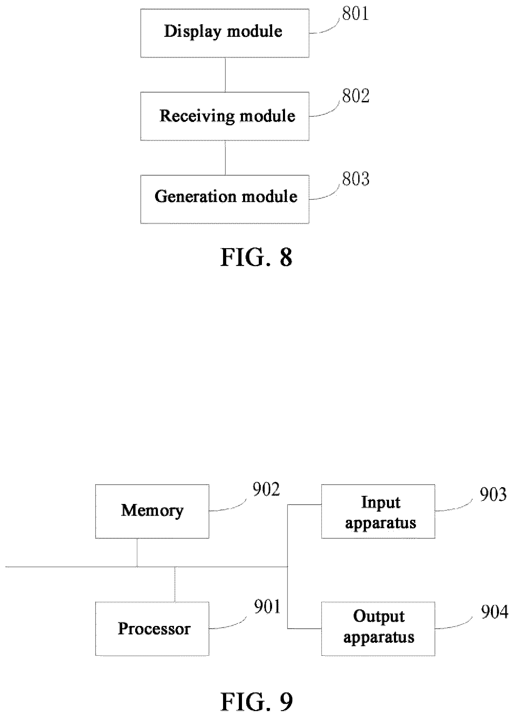

Based on the above method embodiments, the present disclosure further provides a favorite processing apparatus that may be applied to a client. Referring to FIG. 8, which is a schematic diagram of a structure of a favorite processing apparatus according to an embodiment of the present disclosure. The apparatus may include:
a display module 801, configured to display multimedia resources that are in a favorited state according to multimedia types in response to a favorite creation operation performed on a first page;
a receiving module 802, configured to receive a selection operation for at least one multimedia resource belonging to a same multimedia type; and
a generation module 803, configured to generate a target favorite based on the at least one multimedia resource, where a favorite category of the target favorite is determined based on a multimedia type of a multimedia resource contained in the target favorite.

In an alternative implementation, the display module includes:
a display submodule, configured to navigate from a user personal homepage to a resource display page in response to a trigger operation on a favorite creation control on a user personal homepage, and display the multimedia resources that are in the favorited state according to the multimedia types on the resource display page.

In an alternative implementation, the apparatus further includes:
a first display module, configured to display multimedia resources of a target multimedia type that are in the favorited state on the first page.

Correspondingly, the display module includes:
a display submodule, configured to display by default the multimedia resources of the target multimedia type that are in the favorited state in response to the favorite creation operation performed on the first page.

In an alternative implementation, the apparatus further includes:
a second display module, configured to display multimedia resources of the first multimedia type that are in the favorited state in response to a trigger operation that switches from the target multimedia type to a first multimedia type.

In an alternative implementation, the apparatus further includes:
a third display module, configured to display the at least one multimedia resource contained in the target favorite.

In an alternative implementation, the apparatus further includes:
a favorite display module, configured to display at least one favorite on the first page, where multimedia resources contained in favorites of different favorite categories belong to different multimedia types.

In an alternative implementation, each of the at least one favorite has a corresponding category icon, where the category icon is used to identify the favorite category of the corresponding favorite.

According to the favorite processing apparatus provided in this embodiment of the present disclosure, firstly, in response to a favorite creation operation performed on the first page, multimedia resources that are in the favorited state are displayed according to multimedia types. Then, a selection operation for at least one multimedia resource belonging to a same multimedia type is received, and the target favorite is generated based on the at least one multimedia resource. The favorite category of the target favorite is determined based on a multimedia type of a multimedia resource contained in the target favorite. Therefore, according to this embodiments of the present disclosure, favorites of different favorite categories may be created for multimedia resources of different multimedia types, thereby enriching favorite-related functions and enhancing user experience.

In addition to the above method and apparatus, an embodiment of the present disclosure further provides a computer-readable storage medium. The computer-readable storage medium has instructions stored therein. The instructions, when running on a terminal device, cause the terminal device to implement the favorite processing method according to embodiments of the present disclosure.

An embodiment of the present disclosure further provides a computer program product. The computer program product includes a computer program/instruction. The computer program/instruction, when executed by a processor, implements the favorite processing method according to embodiments of the present disclosure.

In addition, an embodiment of the present disclosure further provides a favorite processing device. Referring to FIG. 9, the device may include:
a processor 901, a memory 902, an input apparatus 903, and an output apparatus 904.There may be one or more processors 901 in the favorite processing device, with FIG. 9 illustrating an example of a single processor. In some embodiments of the present disclosure, the processor 901, the memory 902, the input apparatus 903, and the output apparatus 904 may be connected through a bus or other methods. Bus connection is used as an example in FIG. 9.

The memory 902 may be configured to store software programs and modules. The processor 901 performs various functional applications and data processing of the favorite processing device by running the software programs and the modules stored in the memory 902.The memory 902 may mainly include a program storage area and a data storage area, where the program storage area may store an operating system, an application program needed by at least one function, etc. In addition, the memory 902 may include a high-speed random access memory, and may further include a nonvolatile memory, such as at least one magnetic disk storage device, at least one flash memory, or at least one another volatile solid-state storage device. The input apparatus 903 may be configured to receive inputted number or character information and generate signal inputs relevant to user settings and function control of the favorite processing device.

Specifically, in embodiments of the present disclosure, the processor 901 may load executable files corresponding to processes of one or more application programs into the memory 902 according to following instructions, and the processor 901 may run the application programs stored in the memory 902, thereby implementing various functions of the above favorite processing device.

It should be noted that herein, relational terms such as "first" and "second" are used only to distinguish one entity or operation from another and do not necessarily require or imply any actual relationship or order between these entities or operations. In addition, the terms "comprise", "include", or any other variations thereof are intended to cover non-exclusive inclusions, and therefore a process, a method, an article, or a device including a series of elements not only includes those elements but also includes another element not clearly listed, or further includes elements inherent to the process, the method, the article, or the device. In the absence of further restrictions, an element specified by the phrase "including a..." does not exclude the existence of other identical elements in the process, the method, the article, or the device that includes the element.

The above contents are merely specific implementations of the present disclosure, such that those skilled in the art can understand or implement the present disclosure. More modifications for these embodiments are apparent to those skilled in the art, and general principles defined herein may be implemented in other embodiments without departing from the spirit or scope of the present disclosure. Therefore, the present disclosure will not be limited by these embodiments described herein but is required to conform to a widest scope consistent with the principles and novel characteristics disclosed herein.

## Claims

1. A favorite processing method, comprising:
in response to a favorite creation operation performed on a first page, displaying multimedia resources that are in a favorited state according to multimedia types;
receiving a selection operation for at least one multimedia resource belonging to a same multimedia type; and
generating a target favorite based on the at least one multimedia resource, wherein a favorite category of the target favorite is determined based on a multimedia type of a multimedia resource contained in the target favorite.

2. The method according to claim 1, wherein in response to a favorite creation operation performed on a first page, displaying multimedia resources that are in a favorited state according to multimedia types, comprises:
navigating from a user personal homepage to a resource display page in response to a trigger operation on a favorite creation control on the user personal homepage, and displaying the multimedia resources that are in the favorited state according to the multimedia types on the resource display page.

3. The method according to claim 1, wherein before displaying, in response to a favorite creation operation performed on a first page, multimedia resources that are in a favorited state according to multimedia types, the method further comprises:
displaying multimedia resources of a target multimedia type that are in the favorited state on the first page; and
correspondingly, in response to a favorite creation operation performed on a first page, displaying multimedia resources that are in a favorited state according to multimedia types comprises:
in response to the favorite creation operation performed on the first page, displaying by default the multimedia resources of the target multimedia type that are in the favorited state.

4. The method according to claim 3, wherein before generating a target favorite based on the at least one multimedia resource, the method further comprises:
in response to a trigger operation that switches from the target multimedia type to a first multimedia type, displaying a multimedia resource of the first multimedia type that is in the favorited state.

5. The method according to claim 1, wherein after generating a target favorite based on the at least one multimedia resource, the method further comprises:
displaying the at least one multimedia resource contained in the target favorite.

6. The method according to claim 1, further comprising:
displaying at least one favorite on the first page, wherein multimedia resources contained in favorites of different favorite categories belong to different multimedia types.

7. The method according to claim 6, wherein each of the at least one favorite has a corresponding category icon, and wherein the category icon is used to identify a favorite category of the corresponding favorite.

8. A favorite processing apparatus, comprising:
a display module, configured to display, in response to a favorite creation operation performed on a first page, multimedia resources that are in a favorited state according to multimedia types;
a receiving module, configured to receive a selection operation for at least one multimedia resource belonging to a same multimedia type; and
a generation module, configured to generate a target favorite based on the at least one multimedia resource, wherein a favorite category of the target favorite is determined based on a multimedia type of a multimedia resource contained in the target favorite.

9. A computer-readable storage medium, having instructions stored therein, wherein the instructions, when running on a terminal device, cause the terminal device to implement the method according to any of claims 1 to 7.

10. A favorite processing device, comprising: a memory, a processor, and a computer program stored on the memory and runnable on the processor, wherein the processor, when executing the computer program, implements the method according to any of claims 1 to 7.
